(19) Europäisches Patentamt
European Patent Office
Office européen des brevets

(11) **EP 2 455 347 A1**

(12) **EUROPEAN PATENT APPLICATION**
published in accordance with Art. 153(4) EPC

(43) Date of publication:
**23.05.2012 Bulletin 2012/21**

(51) Int Cl.:
**C03B 17/06** (2006.01)

(21) Application number: **10799716.5**

(86) International application number:
**PCT/JP2010/060905**

(22) Date of filing: **25.06.2010**

(87) International publication number:
**WO 2011/007656 (20.01.2011 Gazette 2011/03)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **13.07.2009 JP 2009164346**

(71) Applicant: **Asahi Glass Company, Limited Tokyo 100-8405 (JP)**

(72) Inventors:
• **TSUDA Masahiro**
**Tokyo 100-8405 (JP)**

• **MUKAI Takashi**
**Tokyo 100-8405 (JP)**
• **NARAKI Takeshi**
**Tokyo 100-8405 (JP)**

(74) Representative: **Müller-Boré & Partner Patentanwälte**
**Grafinger Straße 2**
**81671 München (DE)**

(54) **GLASS PLATE PRODUCTION METHOD AND PRODUCTION DEVICE**

(57) The present invention relates to a method for manufacturing a glass sheet, the method including: running down molten glass along both side surfaces of a molded body; joining and integrating the molten glass just under a lower edge part of the molded body; and pinching and downward delivering an end in a width direction of an integrated sheet-shaped glass ribbon by a roller pair, thereby drawing downward the glass ribbon and molding a center in the width direction of the glass ribbon to have an average thickness of 0.3 mm or less, in which a pinching force is adjusted in a range in which a ratio F/T of a pinching force F (unit: N) acting on the end in the width direction of the glass ribbon by rollers of the roller pair to an average thickness T (unit: mm) of the center in the width direction of the glass ribbon after molding satisfies a relation expressed by the following formula (1): 10 (N/mm) $\leq$ F/T $\leq$ 300 (N/mm) (1).

*Fig. 3*

**Description**

TECHNICAL FIEND

The present invention relates to a method and a device for manufacturing a glass sheet.

BACKGROUND ART

A method called a fusion process is conventionally known as a manufacturing method of a high-quality glass sheet (for example, see Patent Document 1). The fusion process is a method in which molten glass is run down along both side surfaces of a molded body with a cross section of a wedge shape converging downward and also the molten glass is joined and integrated just under a lower edge part of the molded body and while cooling an integrated sheet-shaped glass ribbon, the glass ribbon is drawn downward, thereby molding in a predetermined thickness. In the glass ribbon after molding, both ends in a width direction of the glass ribbon are cut off and the remaining center in the width direction is used as a glass sheet which is a product.

Normally, at least a pair of rollers is arranged under the molded body. The pair of rollers is rotated and driven by a driving device such as a motor, and pinches and downward delivers the end in the width direction of the glass ribbon. The glass ribbon is thicker than a predetermined thickness just under the lower edge part of the molded body, and is thinly drawn by a downward drawing force. As the force by which the glass ribbon is drawn downward, own weight of the glass ribbon can be used in addition to rotation torque acting on the glass ribbon from the pair of rollers.

Patent Document 1 proposes that a load acting on each roller from a glass ribbon should be detected to control a rotational speed of each roller based on a detection result in order to maintain the force by which the glass ribbon is drawn downward constant when own weight the glass ribbon varies steadily depending on cutting etc. of the glass ribbon.

BACKGROUNG ART DOCUMENTS

PATENT DOCUMENT

Patent Document 1: JP-T-2008-501605 (Paragraph [0029])

SUMMARY OF THE INVENTION

PROBLEMS THAT THE INVENTION IS TO SOLVE

Incidentally, when a pinching force acting on the end in the width direction of the glass ribbon by a pair of rollers (hereinafter called a roller pair) is too weak, the roller pair slips on the glass ribbon, so that it becomes difficult to equally draw the glass ribbon. Also, when the pinching force is too strong, an excessive load is applied to the end in the width direction of the glass ribbon, so that the glass ribbon may break.

Also, a proper range of the pinching force tends to vary depending on molding conditions. This tendency is remarkable as a thickness of a glass sheet becomes thin, and is particularly remarkable since rigidity of the glass sheet becomes remarkably low when the thickness of the glass sheet is 0.3 mm or less.

Here, the molding conditions refer to conditions of molding the glass sheet, and include, for example, material, size, arrangement of a molding furnace wall and a molded body constructing a manufacturing device of the glass sheet, or temperature distribution of the inside of the device in operation of the manufacturing device in addition to composition or thickness of the glass sheet, a force by which a glass ribbon is drawn downward, thickness of both ends in the width direction, temperature distribution or conveyance speed of the glass ribbon. Also, the molding conditions include, for example, a control method, the amount of heat generation, or arrangement of a heating element for increasing a temperature of the inside of a molding furnace.

However, in the conventional manufacturing method, a distance between the roller pair was fixed and it was difficult to adjust the pinching force, so that it was difficult to handle a change in the molding conditions. As a result, it was difficult to continuously mold the glass sheet with an average thickness of 0.3 mm or less.

The invention has been implemented in view of the problem described above, and an object of the invention is to provide a method and a device for manufacturing a glass sheet capable of easily handling a change in a molding condition and continuously molding a glass sheet with an average thickness of 0.3 mm or less.

MEANS FOR SOLVING THE PROBLEMS

In order to solve the above-mentioned problem, the present invention relates to a method for manufacturing a glass sheet, the method comprising:
running down molten glass along both side surfaces of a molded body;
joining and integrating the molten glass just under a lower edge part of the molded body; and
pinching and downward delivering an end in a width direction of an integrated sheet-shaped glass ribbon by a roller pair, thereby drawing downward the glass ribbon and molding a center in the width direction of the glass ribbon to have an average thickness of 0.3 mm or less,
wherein a pinching force is adjusted in a range in which a ratio F/T of a pinching force F (unit: N) acting on the end in the width direction of the glass ribbon by rollers of the roller pair to an average thickness T (unit: mm) of the center in the width direction of the glass ribbon after molding satisfies a relation expressed by the following formula (1):
$$10 \ (N/mm) \leq F/T \leq 300 \ (N/mm) \qquad (1).$$

Also, the present invention relates to a device for manufacturing a glass sheet, comprising a molded body for joining and integrating molten glass run down along both side surfaces of the molded body just under a lower edge part; and a roller pair for pinching and downward delivering an end in a width direction of a sheet-shaped glass ribbon integrated by the molded body, in which the glass ribbon is drawn downwardly and a center in the width direction of the glass ribbon is molded to have an average thickness of 0.3 mm or less,
wherein the device has an adjusting unit for adjusting a pinching force in a range in which a ratio F/T of a pinching force F (unit: N) acting on the end in the width direction of the glass ribbon by rollers of the roller pair to an average thickness T (unit: mm) of the center in the width direction of the glass ribbon after molding satisfies a relation expressed by the following formula (1):
$$10 \ (N/mm) \leq F/T \leq 300 \ (N/mm) \qquad (1).$$

ADVANTAGE OF THE INVENTION

According to the invention, a method and a device for manufacturing a glass sheet capable of easily handling a change in a molding condition and continuously molding the glass sheet with the average thickness of 0.3 mm or less can be provided.

BRIEF DESCRIPTION OF THE DRAWINGS

Fig. 1 is a partially sectional side view showing a manufacturing device of a glass sheet according to one embodiment of the invention.
Fig. 2 is a front view showing the manufacturing device of the glass sheet of Fig. 1.
Fig. 3 is a side view showing one example of an adjusting unit 31.
Fig. 4 is a side view showing a modified example of Fig. 3.
Fig. 5 is a block diagram showing a driving control system of each roller pair 20.
Fig. 6 is a front view showing a modified example of Fig. 2.

MODE FOR CURRYING OUT THE INVENTION

A mode for carrying out the invention will hereinafter be described with reference to the drawings.

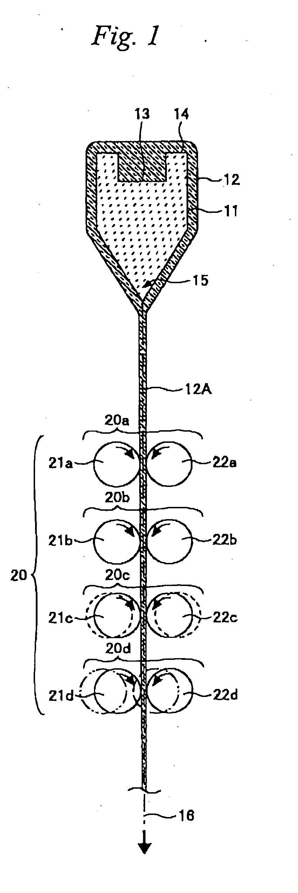

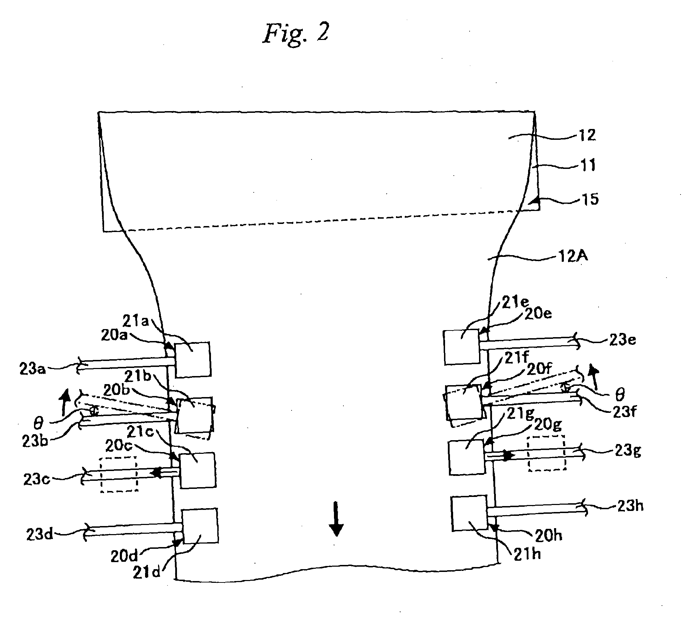

Fig. 1 is a partially sectional side view showing a manufacturing device of a glass sheet according to one embodiment of the invention. Fig. 2 is a front view showing the manufacturing device of the glass sheet of Fig. 1. As shown in Figs. 1 and 2, the manufacturing device of the glass sheet includes a molded body 11, and each of the roller pairs of a first roller 21 a and a second roller 22a, a first roller 21 b and a second roller 22b, a first roller 21c and a second roller 22c, and a first roller 21d and a second roller 22d. Figs. 1 and 2 show an example of including four sets of roller pairs in one end in a width direction of a glass ribbon 12A, that is, a total of eight sets of roller pairs in both ends in the width direction of the glass ribbon 12A, but five sets or more of roller pairs can also be included, and the number of sets of roller pairs is not limited.

The molded body 11 is constructed of, for example, an alumina or zirconia refractory. The molded body 11 has a cross section of a wedge shape converging downward. A recess 13 is formed in the upper portion of the molded body 11.

A molten glass supply pipe (not shown) is connected to the recess 13 of the molded body 11. Molten glass 12 supplied from this molten glass supply pipe to the inside of the recess 13 spills from an upper edge (that is, the upper edge of the molded body 11) 14 of the recess 13, and runs down along both side surfaces of the molded body 11, and joins and integrates just under a lower edge part 15 of the molded body 11. The integrating molten glass 12 forms the sheet-shaped glass ribbon 12A. The roller pairs 20 are installed under the molded body 11.

In an example shown in Figs. 1 and 2, in one end in the width direction of the glass ribbon 12A, the rollers are arranged one by one in both the front and back sides of the right and left sides in Fig. 2, and the four rollers are further arranged in a vertical direction in Figs. 1 and 2. Since the rollers are arranged in both ends in the width direction of the glass ribbon 12A, 16 rollers are arranged as a whole, in other words, eight sets of roller pairs 20 are arranged. The eight sets of roller pairs 20 respectively pinch and downward deliver the end in the width direction of the glass ribbon 12A. Consequently, the glass ribbon 12A is drawn downward and molded.

In the glass ribbon 12A after molding, both ends in the width direction of the glass ribbon 12A are cut off and the remaining center in the width direction is used as a glass sheet which is a product.

The roller pairs 20 are rotated and driven by a driving device such as a motor, and pinch and downward deliver the end in the width direction of the glass ribbon 12A. The glass ribbon 12A is thicker than a predetermined thickness just under the lower edge part 15 of the molded body 11, and is thinly drawn by a downward drawing force. As the force by which the glass ribbon 12A is drawn downward, own weight of the glass ribbon 12A can be used in addition to rotation torque acting on the glass ribbon 12A by the roller pairs 20.

A static friction coefficient between the roller pairs 20 and the glass ribbon 12A is preferably 0.05 to 0.5. When the static friction coefficient is smaller than 0.05, the roller pairs 20 slip on the glass ribbon 12A and it becomes difficult to equally draw the glass ribbon 12A. On the other hand, when the static friction coefficient is larger than 0.5, an excessive load may be applied to the glass ribbon 12A when there is a deviation between a conveyance direction of the glass ribbon 12A and a direction in which the roller pairs 20 deliver the glass ribbon 12A.

The portion of the roller pairs 20 in contact with the glass ribbon 12A is formed of ceramic fiber or metal. In the case of being formed of the metal, the surface is finer than the case of being formed of the ceramic fiber, so that a foreign substance such as a cullet is resistant to adhering. As a result, the foreign substance can be inhibited from biting between the roller pairs 20 and the glass ribbon 12A. Also, in the case of being formed of the metal, the surface is finer than the case of being formed of the ceramic fiber, so that dust is resistant to occurring. As a result, a situation in which the occurring dust adheres to the glass ribbon 12A to cause a defect can be inhibited.

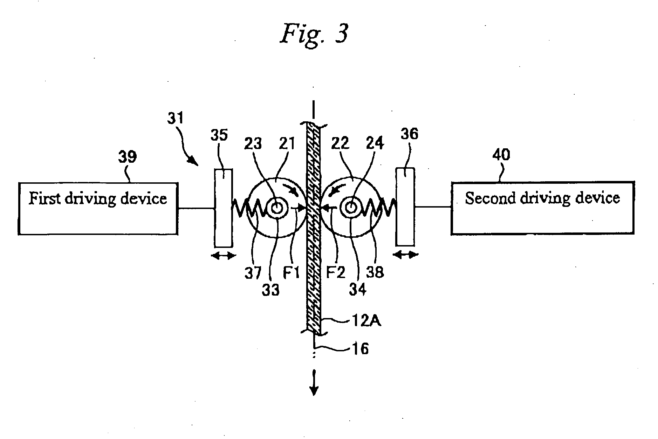

A pinching force F acting on the ends in the width direction of the glass ribbon 12A by the rollers 21a to 21h, 22a to 22h (provided that, the rollers 22e to 22h are not shown) of the roller pairs 20 acts in a direction orthogonal to a main surface of the glass ribbon 12A. Here, the pinching force F refers to respective sizes of pressing forces F1, F2 (see Fig. 3) acting on the ends in the width direction of the glass ribbon 12A by each of the rollers 21 a to 21 h, 22a to 22h. The size F of the pressing force F1 is equal to the size F of the pressing force F2 by the law of action and reaction. In addition, the pinching force F may be set at values different every each roller or at the same value.

Incidentally, when the pinching force F is too weak, the roller pairs 20 slip on the glass ribbon 12A, so that it becomes difficult to equally draw the glass ribbon 12A. Also, when the pinching force F is too strong, an excessive load is applied to the glass ribbon 12A, so that the glass ribbon 12A may break.

Also, a proper range of the pinching force F tends to vary depending on molding conditions. This tendency is remarkable as an average thickness of a glass sheet becomes thin, and is particularly remarkable since rigidity of the glass sheet becomes low when the average thickness of the glass sheet is 0.3 mm or less.

Here, the molding conditions refer to conditions of molding the glass sheet, and include, for example, states of components (the molded body 11, a furnace wall, a heating element, etc.) constructing the manufacturing device of the glass sheet in addition to composition or thickness of the glass sheet, a force by which the glass ribbon 12A is drawn downward, thickness of the end in the width direction, temperature distribution or conveyance speed of the glass ribbon 12A.

On the other hand, the manufacturing device of the glass sheet of the embodiment has an adjusting unit 31 for adjusting the pinching force F acting on the ends in the width direction of the glass ribbon 12A by the roller pairs 20. In addition, the adjusting unit 31 is installed one by one in each roller. The adjusting unit 31 adjusts the pinching force F in a range in which a ratio F/T of the pinching force F (unit: N) to an average thickness T (unit: mm) of the glass sheet satisfies a relation expressed by the following formula (1) when the average thickness T of the glass sheet is 0.3 mm or less. Consequently, a change in the molding conditions can be handled easily, and the glass sheet with the average thickness T of 0.3 mm or less can be molded continuously.

$$10 \ (\text{N/mm}) \leq F/T \leq 300 \ (\text{N/mm}) \qquad (1)$$

When the ratio F/T is smaller than 10 N/mm, the pinching force F is too weak with respect to the average thickness T, so that the roller pairs 20 slip on the glass ribbon 12A, so that it becomes difficult to equally draw the glass ribbon 12A. As a result, a flow of the glass ribbon 12A may disconnect.

On the other hand, when the ratio F/T is larger than 300 N/mm, the pinching force F is too strong with respect to the average thickness T, so that the glass ribbon 12A may break.

In addition, an optimum value of the ratio F/T may vary depending on the molding conditions (for example, deterioration in a heating element (not shown) arranged in the molded body 11 or the periphery of the molded body 11) within the range of 10 N/mm to 300 N/mm. In this case, the ratio F/T can be optimized by the adjusting unit 31.

Next, a configuration of the adjusting unit 31 will be described with reference to Fig. 3.

Fig. 3 is a side view showing one example of the adjusting unit 31.

In the example shown in Fig. 3, each of the adjusting units 31 includes first bearings 33, second bearings 34, a first movable wall 35, a second movable wall 36, a first elastic member 37, a second elastic member 38.

The first bearings 33 rotatably support a first rotating shaft 23 of a first roller 21. The second bearings 34 rotatably support a second rotating shaft 24 of a second roller 22. The first bearings 33 and the second bearings 34 respectively include, for example, ball bearings. Outer rings of the first bearings 33 and the second bearings 34 are respectively supported in support stands (not shown) movably in a direction of moving near to or away from the glass ribbon 12A (in other words, a vertical plane 16 including a lower edge of the molded body 11). That is, the outer rings of the first bearings 33 and the second bearings 34 are supported in the support stands movably in the direction of moving near to or away from each other.

The first movable wall 35 and the second movable wall 36 are respectively supported in the support stands movably in the direction of moving near to or away from the glass ribbon 12A (in other words, the vertical plane 16). That is, the first movable wall 35 and the second movable wall 36 are supported in the support stands movably in the direction of moving near to or away from each other. The first movable wall 35 and the second movable wall 36 are formed of, for example, a metal material such as stainless steel, and are not particularly limited to the material.

The first elastic member 37 is interposed between the outer ring of the first bearings 33 and the first movable wall 35. The first elastic member 37 is constructed of, for example, a coil spring, and is interposed in a compressed state between the outer ring of the first bearings 33 and the first movable wall 35.

The second elastic member 38 is interposed between the outer ring of the second bearings 34 and the second movable wall 36. The second elastic member 38 is constructed of, for example, a coil spring, and is interposed in a compressed state between the outer ring of the second bearings 34 and the second movable wall 36.

The first elastic member 37 elastically urges the first roller 21 through the first bearings 33 in a direction of moving near to the glass ribbon 12A (in other words, the vertical plane 16). That is, the first elastic member 37 elastically urges the first roller 21 in the direction of moving near to the second roller 22.

The second elastic member 38 elastically urges the second roller 22 through the second bearings 34 in a direction of moving near to the glass ribbon 12A (in other words, the vertical plane 16). That is, the second elastic member 38 elastically urges the second roller 22 in the direction of moving near to the first roller 21.

An elastic urging force of the first elastic member 37 is determined by, for example, an elastic coefficient K1 of the first elastic member 37 or the amount of compression $\Delta X1$ (not shown) from a natural state. An elastic urging force of the second elastic member 38 is determined by, for example, an elastic coefficient K2 of the second elastic member 38 or the amount of compression $\Delta X2$ (not shown) from a natural state. The elastic coefficient K1 may be equal to or different from the elastic coefficient K2.

In the embodiment, the elastic urging force of the first elastic member 37 forms the pressing force F1 acting on the end in the width direction of the glass ribbon 12A by the first roller 21, and the elastic urging force of the second elastic member 38 forms the pressing force F2 acting on the end in the width direction of the glass ribbon 12A by the second roller 22. The size F of the pressing force F1 is equal to the size F of the pressing force F2 by the law of action and reaction.

Next, an operation of the adjusting unit 31 will be described with reference to Fig. 3.

When the first movable wall 35 and the second movable wall 36 are fixed with respect to the vertical plane 16 after being moved in the direction of moving near to or away from each other manually or by a first driving device 39 and a second driving device 40 such as an air cylinder, the amounts of compression $\Delta X1$, $\Delta X2$ from the natural state change. As a result, the elastic urging forces of the first elastic member 37 and the second elastic member 38 change, and the pinching force F changes. Consequently, a change in the molding conditions can be handled easily.

Also, when the first movable wall 35 and the second movable wall 36 are fixed with respect to the vertical plane 16, the amounts of compression $\Delta X1$, $\Delta X2$ from the natural state change according to variations in thickness of the end in the width direction of the glass ribbon 12A. As a result, the elastic urging forces of the first elastic member 37 and the second elastic member 38 change, and the pinching force F changes. More specifically, when the end in the width direction of the glass ribbon 12A becomes thick, the amounts of compression $\Delta X1$, $\Delta X2$ from the natural state become large, so that the sizes of the elastic urging forces become large and the pinching force F becomes large. Also, when the end in the width direction of the glass ribbon 12A becomes thin, the amounts of compression $\Delta X1$, $\Delta X2$ from the natural state become small, so that the sizes of the elastic urging forces become small and the pinching force F becomes small. Consequently, the excessive pinching force F can be inhibited from being applied to the end in the width direction of the glass ribbon 12A.

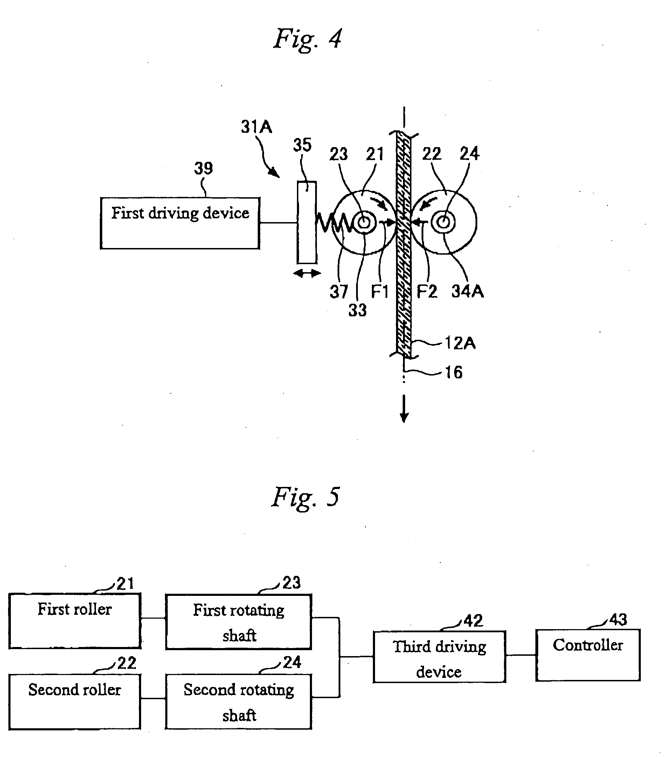

Fig. 4 is a side view showing a modified example of Fig. 3.

In the example shown in Fig. 4, an adjusting unit 31A includes first bearings 33, second bearings 34A, a first movable wall 35, a first elastic member 37, etc. A configuration and an operation of the adjusting unit 31 A will hereinafter be described, but explanation of the same configuration as that of Fig. 3 is omitted by assigning the same numerals.

In the example shown in Fig. 3, the outer rings of the second bearings 34 are supported in the support stand movably in the direction of moving near to or away from the outer rings of the first bearings 33.

On the other hand, in the example shown in Fig. 4, outer rings of the second bearings 34A are fixed to the support stand.

Next, an operation of the adjusting unit 31A will be described with reference to Fig. 4.

When the first movable wall 35 is fixed with respect to the vertical plane 16 after being moved in a direction of moving near to or away from the glass ribbon 12A (in other words, the vertical plane 16) manually or by a first driving device 39 such as an air cylinder, the amount of compression $\Delta X1$ from a natural state changes. As a result, an elastic urging force of the first elastic member 37 changes and the pinching force F changes. Therefore, also in this case, a change in the molding conditions can be handled easily.

Also, when the first movable wall 35 is fixed with respect to the vertical plane 16, the amount of compression $\Delta X1$ from the natural state changes according to variations in thickness of the end in the width direction of the glass ribbon 12A. As a result, the elastic urging force of the first elastic member 37 changes and the pinching force F changes. Therefore, also in this case, the excessive pinching force F can be inhibited from being applied to the end in the width direction of the glass ribbon 12A.

In addition, in the examples shown in Figs. 3 and 4, in order to adjust the pinching force F, the elastic urging forces of the first elastic member 37 and the second elastic member 38 are used, but the invention is not limited to this. For example, pressure of an air cylinder, an oil hydraulic cylinder, etc. may be used or gravity of a weight etc. may be used in order to adjust the pinching force F.

Next, a driving control system of the roller pairs 20 will be described with reference to Fig. 5.

Fig. 5 is a block diagram showing the driving control system of the roller pairs 20.

In an example shown in Fig. 5, in the roller pairs 20, the first rotating shaft 23 and the second rotating shaft 24 of the first roller 21 and the second roller 22 are connected to one third driving device 42 through a gear (not shown).

The third driving device 42 includes, for example, a motor, and rotates and drives the first rotating shaft 23 and the second rotating shaft 24 in the opposite direction mutually under control by a controller 43. Consequently, the first roller 21 and the second roller 22 rotate in the opposite direction mutually, and pinch and downward deliver the glass ribbon 12A.

The third driving devices 42 are installed one by one in plural roller pairs 20a to 20h. The plural third driving devices 42 are connected to one controller 43.

The controller 43 controls the plural third driving devices 42, and mutually associates respective rotational speeds of the plural roller pairs 20a to 20h and controls the rotational speeds, so that distribution of stress applied to the glass ribbon 12A by each of the plural roller pairs 20a to 20h can be optimized easily.

For example, when the respective rotational speeds of the plural roller pairs 20a to 20h are changed, the controller 43 can maintain a rotational speed ratio of the plural roller pairs 20a to 20h constant. Consequently, for example, when the respective rotational speeds of the plural roller pairs 20a to 20h are changed according to variations in the amount of molten glass supply, distribution of stress applied to the glass ribbon 12A can be optimized and the average thickness T of the glass sheet can easily be maintained constant.

In addition, in the example shown in Fig. 5, the first rotating shaft 23 and the second rotating shaft 24 are connected to one third driving device 42 through the gear, but the invention is not limited to this. For example, the first rotating shaft 23 and the second rotating shaft 24 may be respectively directly connected to the mutually different third driving devices 42.

Next, adjustment of an angle and a position of the roller pairs 20 will be described again with reference to Figs. 1 and 2.

A position of the end in the width direction of the glass ribbon 12A changes when the roller pair 20 is moved in a direction orthogonal to the vertical plane 16 while maintaining a distance between the roller pair 20 by moving the first movable wall 35 and the second movable wall 36 with respect to the support stands or moving the support stands manually or by the driving device such as the air cylinder as shown by two-dot chain lines in Fig. 1.

Consequently, distribution of stress applied to the glass ribbon 12A changes, so that warpage of the glass ribbon 12A may be inhibited.

Also, consequently, the roller pair 20 can be moved in a proper position according to the molding conditions.

Angles θ between a horizontal plane and the first rotating shaft 23 and the second rotating shaft 24 change when the first rotating shaft 23 and the second rotating shaft 24 of the roller pair 20 are turned in a vertical direction by moving the support stands manually or by the driving device such as the air cylinder as shown by two-dot chain lines in Fig. 2.

Consequently, a conveyance direction of the glass ribbon 12A and a direction in which each of the roller pairs 20 delivers the glass ribbon 12A can be adjusted. As a result, warpage of the glass ribbon 12A may be inhibited.

Also, consequently, each of the roller pairs 20 can be moved in a proper position according to the molding conditions.

The roller pair 20 moves away from the glass ribbon 12A when the roller pair 20 is moved in a direction away from the vertical plane 16 by moving the first movable wall 35 and the second movable wall 36 with respect to the support stands or moving the support stands manually or by the driving device such as the air cylinder as shown by dotted lines in Fig. 1. Consequently, the plural roller pairs 20a to 20h can be used selectively, and distribution of stress applied to the glass ribbon 12A can be adjusted,

The unused roller pair 20 can be prevented from being damaged in the case of disturbing a flow of the glass ribbon 12A when the unused roller pair 20 is moved to the outside in the width direction of the glass ribbon 12A by moving the support stands manually or by the driving device such as the air cylinder as shown by dotted lines in Fig. 2.

According to this embodiment as described above, the pinching force F is adjusted in the range in which the ratio F/T of the pinching force F (unit: N) acting on the end in the width direction of the glass ribbon by the rollers of the roller pair 20 to the average thickness T (unit: mm) of the glass sheet satisfies the relation expressed by the following formula (1) when the average thickness T of the glass sheet is 0.3 mm or less, so that a change in the molding conditions can be handled easily, and the glass sheet with the average thickness T of 0.3 mm or less can be molded continuously.

$$10 \ (\text{N/mm}) \leq F/T \leq 300 \ (\text{N/mm}) \qquad (1)$$

Also, according to this embodiment, the pinching force F is changed according to variations in thickness of the end in the width direction of the glass ribbon 12A, so that the excessive pinching force F can be inhibited from being applied to the end in the width direction of the glass ribbon 12A.

Also, according to this embodiment, the angles θ between the horizontal plane and the first rotating shaft 23 and the second rotating shaft 24 of the roller pair 20 are adjusted, so that warpage of the glass ribbon 12A may be prevented. Also, the roller pair 20 can be moved in a proper position according to the molding conditions.

Also, according to the embodiment, the plural roller pairs 20a to 20h can be used selectively, and distribution of stress applied to the glass ribbon 12A can be adjusted.

Also, according to this embodiment, the unused roller pair 20 is moved to outside in the width direction of the glass ribbon 12A, so that the unused roller pair 20 can be prevented from being damaged in the case of disturbing a flow of the glass ribbon 12A.

Also, according to this embodiment, the respective rotational speeds of the plural roller pairs 20a to 20h are mutually associated and are controlled by one controller 43, so that distribution of stress applied to the glass ribbon 12A by the roller pairs 20 can be optimized easily.

For example, when the respective rotational speeds of the plural roller pairs 20a to 20h are changed, the rotational speed ratio of the plural roller pairs 20a to 20h can be maintained constant. Consequently, for example, when the respective rotational speeds of the plural roller pairs 20a to 20h are changed according to variations in the amount of molten glass supply, distribution of stress applied to the glass ribbon 12A can be optimized and the average thickness T of the glass sheet can easily be maintained constant.

Also, according to this embodiment, the portion of the roller pairs 20 in contact with the glass ribbon 12A is formed of metal, so that a foreign substance such as a cullet can be inhibited from adhering as compared with the case of being formed of ceramic fiber. Consequently, the foreign substance can be inhibited from biting between the roller pairs 20 and the glass ribbon 12A. Also, the portion of the roller pairs 20 in contact with the glass ribbon 12A is formed of metal, so that dust can be inhibited from occurring as compared with the case of being formed of ceramic fiber, and a situation in which the occurring dust adheres to the glass ribbon 12A to cause a defect can be inhibited.

Also, according to this embodiment, the static friction coefficient between the roller pair 20 and the glass ribbon 12A is 0.05 to 0.5, so that the glass ribbon 12A can be drawn equally and also, an excessive load can be inhibited from being applied to the glass ribbon 12A.

The embodiment of the invention has been described above in detail, but the invention is not limited to the embodiment described above, and various modifications and replacements can be made in the embodiment described above without departing from the scope of the invention.

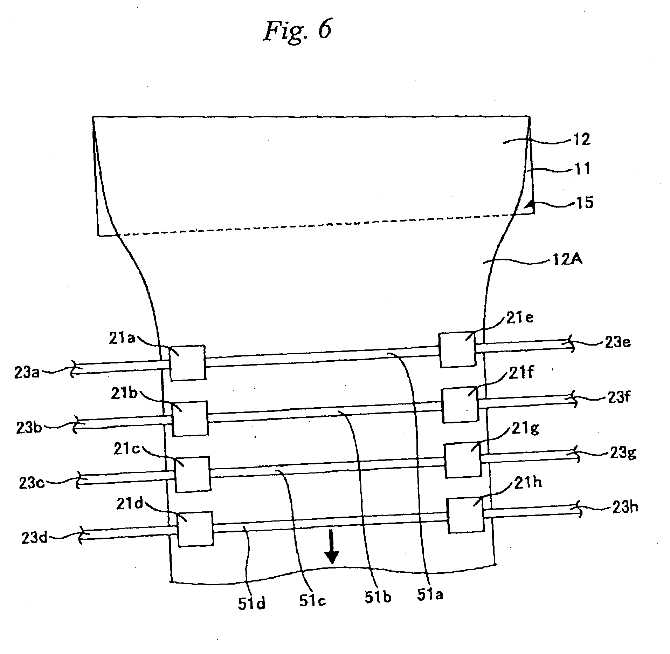

For example, in the embodiment described above, the right and left rollers 21a to 21d, 21e to 21h have an independently rotatable configuration as shown in Fig. 2, but coupling rods 51a to 51d for coupling the right and left rollers 21 a to 21 d, 21 e to 21h may be coaxially provided to synchronize rotation of the right and left rollers 21a to 21d, 21e to 21h as shown in Fig. 6. Similarly, coupling rods (not shown) for coupling other right and left rollers 22a to 22d (not shown), 22e to 22h (not shown) opposed to the right and left rollers described above may be coaxially provided to synchronize rotation of the right and left rollers 22a to 22d, 22e to 22h.

EXAMPLES

The invention will hereinafter be described concretely by examples, but the invention is not limited to the following examples.

(Examples 1 to 12, Comparative Examples 1 to 12)

In Examples 1 to 12 and Comparative Examples 1 to 12, using the manufacturing device of the glass sheet shown in Figs. 1 to 3, a non-alkali glass sheet was manufactured and moldability of the glass sheet was evaluated by the following criterion. Table 1 shows the evaluation results together with the average thickness T of the glass sheet, the pinching force F by the rollers of the roller pairs 20, and the ratio F/T.

<Criterion>

○... The glass ribbon 12A could be molded continuously for five hours or more.
×... A flow of the glass ribbon 12A disconnected within five hours.

[Table 1]

|  | Average Thickness T (mm) | Punching Force F (N) | F/T (N/mm) | Moldability |
|---|---|---|---|---|
| Example 1 | 0.3 | 3 | 10 | ○ |
| Example 2 | 0.3 | 15 | 50 | ○ |
| Example 3 | 0.3 | 45 | 150 | ○ |
| Example 4 | 0.3 | 90 | 300 | ○ |
| Example 5 | 0.2 | 2 | 10 | ○ |
| Example 6 | 0.2 | 10 | 50 | ○ |
| Example 7 | 0.2 | 30 | 150 | ○ |
| Example 8 | 0.2 | 60 | 300 | ○ |
| Example 9 | 0.1 | 1 | 10 | ○ |
| Example 10 | 0.1 | 5 | 50 | ○ |
| Example 11 | 0.1 | 15 | 150 | ○ |
| Example 12 | 0.1 | 30 | 300 | ○ |
| Comparative Example 1 | 0.3 | 0.6 | 2 | × |
| Comparative Example 2 | 0.3 | 1.5 | 5 | × |

(continued)

|  | Average Thickness T (mm) | Punching Force F (N) | F/T (N/mm) | Moldability |
|---|---|---|---|---|
| Comparative Example 3 | 0.2 | 0,4 | 2 | × |
| Comparative Example 4 | 0.2 | 1 | 5 | × |
| Comparative Example 5 | 0.1 | 0.2 | 2 | × |
| Comparative Example 6 | 0.1 | 0.5 | 5 | × |
| Comparative Example 7 | 0.3 | 120 | 400 | × |
| Comparative Example 8 | 0.3 | 180 | 600 | × |
| Comparative Example 9 | 0.2 | 80 | 400 | × |
| Comparative Example 10 | 0.2 | 120 | 600 | × |
| Comparative Example 11 | 0.1 | 40 | 400 | × |
| Comparative Example 12 | 0.1 | 60 | 600 | × |

It is apparent from Table 1 that a flow of the glass ribbon 12A disconnects when the ratio F/T is more than 300 N/mm and when the ratio F/T is less than 10 N/mm. Also, it is apparent from Table 1 that the glass sheet can be molded continuously stably by adjusting the ratio F/T in the range of 10 N/mm to 300 N/mm according to molding conditions.

The invention has been described in detail with reference to the specific embodiment, but it is apparent to those skilled in the art that various changes or modifications can be made without departing from the spirit and scope of the invention.

The present application is based on Japanese patent application No. 2009-164346 filed on July 13, 2009, and the contents of the patent application are hereby incorporated by reference.

INDUSTRIAL APPLICABILITY

According to the invention, a method and device for manufacturing a glass sheet capable of easily handling a change in a molding condition and continuously molding a glass sheet with an average thickness of 0.3 mm or less can be provided.

DESCRIPTION OF REFERENCE NUMERALS AND SIGNS

11      MOLDED BODY
12      MOLTEN GLASS
12A    GLASS RIBBON
14      UPPER EDGE
15      LOWER EDGE PART
20      ROLLER PAIR
21      FIRST ROLLER
22      SECOND ROLLER
23      FIRST ROTATING SHAFT
24      SECOND ROTATING SHAFT
31      ADJUSTING UNIT
43      CONTROLLER

**Claims**

1.   A method for manufacturing a glass sheet, the method comprising:

        running down molten glass along both side surfaces of a molded body;
        joining and integrating the molten glass just under a lower edge part of the molded body; and

pinching and downward delivering an end in a width direction of an integrated sheet-shaped glass ribbon by a roller pair, thereby drawing downward the glass ribbon and molding a center in the width direction of the glass ribbon to have an average thickness of 0.3 mm or less,

wherein a pinching force is adjusted in a range in which a ratio F/T of a pinching force F (unit: N) acting on the end in the width direction of the glass ribbon by rollers of the roller pair to an average thickness T (unit: mm) of the center in the width direction of the glass ribbon after molding satisfies a relation expressed by the following formula (1):

$$10 \ (N/mm) \leq F/T \leq 300 \ (N/mm) \tag{1}.$$

2.  The method for manufacturing a glass sheet according to claim 1, wherein the pinching force is changed according to variations in thickness of the end in the width direction of the glass ribbon passing between the roller pair.

3.  The method for manufacturing a glass sheet according to claim 1 or 2, wherein an angle between a horizontal plane and a rotating shaft of the roller pair is adjusted.

4.  The method for manufacturing a glass sheet according to any one of claims 1 to 3, wherein plural sets of the roller pair are arranged, and the plural sets of the roller pair are used selectively.

5.  The method for manufacturing a glass sheet according to claim 4, wherein unused roller pair is moved to outside in the width direction of the glass ribbon.

6.  The method for manufacturing a glass sheet according to any one of claims 1 to 5, wherein plural sets of the roller pair are arranged, and respective rotational speeds of the plural sets of the roller pair are mutually associated and are controlled by one controller.

7.  The method for manufacturing a glass sheet according to claim 6, wherein a rotational speed ratio of the plural sets of the roller pair is maintained constant.

8.  The method for manufacturing a glass sheet according to any one of claims 1 to 7, wherein the portion of each roller pair in contact with the glass ribbon is formed of metal.

9.  The method for manufacturing a glass sheet according to any one of claims 1 to 8, wherein a static friction coefficient between each roller pair and the glass ribbon is 0.05 to 0.5.

10. A device for manufacturing a glass sheet, comprising a molded body for joining and integrating molten glass run down along both side surfaces of the molded body just under a lower edge part; and a roller pair for pinching and downward delivering an end in a width direction of a sheet-shaped glass ribbon integrated by the molded body, in which the glass ribbon is drawn downwardly and a center in the width direction of the glass ribbon is molded to have an average thickness of 0.3 mm or less,

wherein the device has an adjusting unit for adjusting a pinching force in a range in which a ratio F/T of a pinching force F (unit: N) acting on the end in the width direction of the glass ribbon by rollers of the roller pair to an average thickness T (unit: mm) of the center in the width direction of the glass ribbon after molding satisfies a relation expressed by the following formula (1):

$$10 \ (N/mm) \leq F/T \leq 300 \ (N/mm) \tag{1}.$$

11. The device for manufacturing a glass sheet according to claim 10, wherein the adjusting unit changes the pinching force according to variations in thickness of the end in the width direction of the glass ribbon passing between the roller pair.

*Fig. 1*

*Fig. 2*

## Fig. 3

*Fig. 4*

31A
39
35  23  21  22  24

First driving device

37  F1  F2  34A
33

12A
16

*Fig. 5*

21
First roller

23
First rotating shaft

22
Second roller

24
Second rotating shaft

42
Third driving device

43
Controller

*Fig. 6*

<table>
<tr><td colspan="2" align="center"><b>INTERNATIONAL SEARCH REPORT</b></td><td>International application No.<br>PCT/JP2010/060905</td></tr>
</table>

| | |
|---|---|
| A. CLASSIFICATION OF SUBJECT MATTER<br>*C03B17/06*(2006.01)i | |

According to International Patent Classification (IPC) or to both national classification and IPC

**B. FIELDS SEARCHED**

Minimum documentation searched (classification system followed by classification symbols)
C03B13/00-13/18, C03B17/00-17/06, C03B35/00-35/26, C03B40/00-40/04

Documentation searched other than minimum documentation to the extent that such documents are included in the fields searched
Jitsuyo Shinan Koho          1922-1996   Jitsuyo Shinan Toroku Koho   1996-2010
Kokai Jitsuyo Shinan Koho    1971-2010   Toroku Jitsuyo Shinan Koho   1994-2010

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2008-105882 A  (Nippon Electric Glass Co., Ltd.),<br>08 May 2008 (08.05.2008),<br>paragraphs [0027] to [0042]; fig. 1, 2<br>& US 2010/0031702 A1     & EP 2077255 A1 | 1-11 |
| Y | JP 2009-149463 A  (Nippon Electric Glass Co., Ltd.),<br>09 July 2009 (09.07.2009),<br>paragraph [0009]<br>(Family: none) | 1-11 |
| Y | JP 10-291826 A  (Hoya Corp.),<br>04 November 1998 (04.11.1998),<br>paragraphs [0029], [0030], [0053], [0054]<br>(Family: none) | 3-8 |

☒  Further documents are listed in the continuation of Box C.          ☐  See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>17 August, 2010 (17.08.10) | Date of mailing of the international search report<br>31 August, 2010 (31.08.10) |
| Name and mailing address of the ISA/<br>Japanese Patent Office | Authorized officer |
| Facsimile No. | Telephone No. |

Form PCT/ISA/210 (second sheet) (July 2009)

16

**INTERNATIONAL SEARCH REPORT**

| International application No. |
|---|
| PCT/JP2010/060905 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 63-170232 A  (Saint-Gobain Vitrage),<br>14 July 1988 (14.07.1988),<br>page 6, upper right column, lines 11 to 14<br>& US 4838920 A         & EP 267120 A1 | 9 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008501605 T

- JP 2009164346 A